# EUROPEAN PATENT SPECIFICATION

(11) **EP 3 914 892 B1**
(45) Date of publication and mention of the grant of the patent: **15.05.2024**
(21) Application number: 20704771.3
(22) Date of filing: 24.01.2020
(51) Int. Cl.: G01N 1/30, G03F 7/20

(54) **CONTRAST SOLUTION FOR THE CHARACTERISATION OF BIOLOGICAL SAMPLES BY ELECTRON OR CORRELATIVE MICROSCOPY**
KONTRASTLÖSUNG ZUR CHARAKTERISIERUNG BIOLOGISCHER PROBEN DURCH ELEKTRONEN- ODER KORRELATIVE MIKROSKOPIE
SOLUTION DE CONTRASTE POUR LA CARACTÉRISATION D'ÉCHANTILLONS BIOLOGIQUES PAR MICROSCOPIE ÉLECTRONIQUE OU CORRELATIVE

(30) Priority: 25.01.2019 IT 201900001117
(43) Date of publication of application: 01.12.2021
(73) Proprietor: Fondazione Istituto Italiano di Tecnologia, 16163 Genova (IT); Scuola Normale Superiore, 56126 Pisa (IT)
(72) Inventor: CAPPELLO, Valentina, 61032 Fano (Pesaro-Urbino) (IT); SIGNORE, Giovanni, 56124 Pisa (IT); DI PIETRO, Sebastiano, 56124 Pisa (IT); SANTI, Melissa, 58024 Massa Marittima (Grosseto) (IT); MOSCARDINI, Aldo, 55020 Fosciandora (Lucca) (IT); GEMMI, Mauro, 56126 Pisa (IT)
(74) Representative: Biggi, Cristina
(86) International application number: PCT/IB2020/050555
(87) International publication number: WO 2020/152636

(56) References cited:
- WO-A1-2016/061201
- WO-A1-2017/017428
- WO-A1-2019/021201
- JP-A- 2010 235 670

## Description

### TECHNICAL FIELD

The present invention relates to the field of substances used in the preparation of biological samples that must be characterised by means of electron or correlative microscopy. More precisely, the invention relates to a contrast solution that is alternative to uranyl acetate for the characterisation of biological samples by either correlative microscopy (CLEM) or electron microscopy (EM).

### PRIOR ART

In recent years, correlative microscopic characterisation methods have attracted great interest in the field of diagnosis and research, thanks above all to the possibility of integrating information coming from different microscopic methods. One of the most interesting techniques is so-called correlative light-electron microscopy (CLEM), a technology that combines fluorescence microscopy (FM) or light microscopy (LM) and electron microscopy (EM). This technique enables the extrapolation, from a single sample, of data that are normally not correlatable with one another, thus introducing the possibility of simultaneously comprehending the function and structure of the biological samples analysed in a single experiment. For example, the CLEM technique can be used to obtain the location of specific molecules within a cell and tissue sample to be correlated with information relating to the ultrastructure of the sample. As in the case of biological sample characterisation by "conventional" electron microscopy, the CLEM technique requires that the ultrastructure and contrast be preserved, but at the same time the use of this technique introduces the need to preserve the fluorescence signal of the samples. In order to attain this objective, one of the aspects to be taken into consideration regards the fact that the ultrastructure of the sample must be completely preserved by fixing. Fixing operations are generally based on physical and/or chemical approaches (generally comprising treatment with aldehydes - chemical; or freezing processes - physical) implemented for the purpose of fixing the molecules present in the biological sample in their natural state and in the position in which they are found *in vivo,* while preventing their decomposition at the same time.

In the case of the CLEM technique, the optimal fixing approach appears to be high-pressure freezing/substitution of water with an organic solvent at cryogenic temperatures (HPF/FS - high-pressure freezing/freeze substitution). This technique is based on reducing the overall concentration of aldehyde compounds and, by exploiting the cryogenic approach, i.e. a physical fixing method, it enables the fluorescence signal to be preserved while simultaneously maintaining intact the ultrastructure of the biological samples analysed.

However, this and other similar approaches presently used in the sector do not produce satisfactory results in the case of correlative microscopy, since they do not provide contrast that is sufficient to allow visualisation of the sample by electron microscopy (EM) and necessarily require the presence of contrast agents containing heavy atoms.

As is well known, in electron microscopy the contrast depends on the atomic number of the atoms present in the sample. The higher the atomic number is, the more scattered the electrons will be and the greater the contrast obtained. Biological molecules are composed of atoms with a very low atomic number (carbon, hydrogen, oxygen, nitrogen, phosphorous, sulphur, etc.) and, for this reason, high concentrations of contrast agents containing heavy metals are generally used.

In the prior art, the contrast medium (or contrast agent) of reference conventionally used as a contrast medium for biological samples in electron microscopy is uranyl acetate. However, the radioactive nature of uranyl acetate and the derivatives thereof causes severe restrictions from a safety standpoint. Furthermore, the delivery and disposal of uranyl acetate derivatives is extremely costly due to the increasingly strict regulations they are subject to.

Furthermore, this type of contrast agent is unsuitable for optical microscopy and thus also for correlative microscopy, due both to an ample background (auto)fluorescence in the red and green region of the spectrum and the quenching action of the majority of synthetic and protein-based fluorophores on the fluorescence signal.

On the basis of these considerations, it is clear that the use of traditional contrast agents based on uranyl acetate has two opposite effects on the sample: on the one hand, it enables better visualisation in the case of electron microscopy, on the other hand it negatively influences the optical detection of fluorescence, thus inhibiting the possibility of carrying out correlative microscopy experiments.

Nonetheless, to date uranyl acetate remains the contrast agent most commonly used also for correlative purposes, even though it is not optimal for this technique, as it must be used in relatively high concentrations which, because of the high background signal, are not fully compatible with fluorescence-based techniques. In this regard, in the present state of the art, the most commonly used expedient is to maintain the concentration of the contrast agent as low as possible, to the detriment, however, of sample contrast, since it is known that uranyl acetate (UA) does not provide satisfactory results if used at low concentrations.

As regards the presently commercially available contrast media that are alternatives to uranyl acetate (such as, for example, "Uranyless", "336 uranyl acetate alternative", "NanoW" and "platinum blue"), although they enable the problem of handling radioactive materials to be overcome, they perform poorly in terms of contrast efficiency and their use is thus even more disadvantageous in the case of correlative microscopy.

Therefore, there is a strongly felt need in the sector to identify contrast media that are suitable both in the case of conventional electron microscopy and correlative microscopy, and above all to identify contrast media that are not derived from depleted uranium and show a greater contrast efficiency than the uranyl acetate used until now, but which can at the same time give satisfactory results in fluorescence microscopy and thus also be used in correlative microscopy experiments.

Biological sample contrast and negative contrast procedures using substances other than uranyl acetate and the analogues thereof (for example, uranyl formate) have been studied and developed since the beginning of the 1970s. The procedures currently most widely used as alternatives to uranyl acetate are described in the publication Basic techniques for transmission electron microscopy (M.A. Hayat, Academic Press,1986) and are mainly based on the use of transition metals. Possible contrast media that can substitute for uranyl acetate and have properties similar to that compound have recently been the subject of study. For example, in the study *New versatile staining reagents for biological transmission electron microscopy that substitute for uranyl acetate.* Nakatoshi et al. Journal of Electron Microscopy 60(6): 401-407 (2011*),* the authors tested samarium and gadolinium in the form of acetate salts for contrasting both animal samples and plant samples, since the dimensions of these two elements in terms of atomic radius are similar to those of uranium. In the discussion of the results, it is stated that the tested compounds could be excellent substitutes for uranyl acetate in thin section contrast (*post-sectioning staining*), but, as regards contrast efficiency, they provided only fair results. Furthermore, the tested compounds demonstrated to be devoid of the fixative properties of uranyl acetate.

In order to improve the contrasting capability of the tested compounds, the authors suggest the inclusion of supplementary substances that could have a positive influence. However, in the prior art it is difficult to identify substances which, when added to lanthanide salts, are capable of forming chemically stable solutions with a low chemical risk and which make it possible to obtain better images, at least as far as electron microscopy is concerned, or at least ones that are comparable to those obtainable with uranyl acetate. In this regard, phosphotungstic acid (abbreviated with the acronym PTA) has very often been used with good results in optical microscopy as a stain in combination with other substances, as is reported, for example, in patent application GB2372811. In this document, PTA is used in an alcoholic solution combined with eosin or synthetic azo dyes, but in no case with lanthanides or salts thereof. Considering, on the other hand, the use of PTA in contrast techniques in transmission electron microscopy (TEM), the scientific publication *Examination of electron stains as a substitute for uranyl acetate for the ultrathin sections of bacterial cells.* Tgamuchu et al. Journal of Electron Microscopy 59(2): 113-118 (2010*)* reports a comparative study between PTA and other contrast agents that are alternatives to uranyl acetate. From this study it emerges that none of the tested compounds (namely, in addition to PTA, platinum blue, oolong tea extract and potassium permanganate) provide contrast results comparable to those of uranyl acetate. In particular, PTA provided low quality images in tests with both Gram-positive and Gram-negative bacteria.

Patent WO2017/017428 relates to the preparation of samples, in particular histological samples, for the characterisation thereof by scanning electron microscopy (SEM) or transmission electron microscopy (TEM). In particular, this publication envisages the possibility of incorporating a secondary electron generator (such as, for example, a compound selected from among AlCl₃, TiCl₃, TiCl₄, CrCl₃, GaCl₃, YCl₃, MoCl₃, AgCl, InCl₃, SbCl₃, HfCl₃, TaCl₃, WCl₃, OsCl₃, IrCl₃, AuCI, HauCl₄, HgCl₂, CeCl₃, NdCl₃ and ErCl₃) and possibly a contrast agent (such as, for example, phosphotungstic acid, phosphomolybdic acid, lanthanum nitrate and/or a combination thereof) into the sample to be analysed, for the purpose of increasing the resolution of the images obtained by electron microscopy.

Said patent also envisages the possibility of incorporating a *self-healing* material in order to reduce the possible collateral damage caused to the sample during *imaging.*

None of these alternatives, however, have yet been thoroughly tested in the field of correlative microscopy, since, as mentioned previously, the contrast agents presently available for electron microscopy are not always suitable for an optimal implementation of the CLEM technique. In fact, an ideal contrast agent in this field must be able to completely preserve the contrast also at relatively low concentrations, while at the same time enabling an excellent sensitivity in fluorescence measurements.

The present invention solves this problem by providing a solution based on lanthanide salts and heteropolyacids and a use thereof as a contrast solution both in correlative microscopy (CLEM) and in conventional electron microscopy (EM).

The solution of the present invention is defined in claim 1.

The Applicant has in fact found that by combining lanthanide salts with heteropolyacids, which are generally used in optical microscopy, but at the same time considered to perform poorly in electron microscopy, it is possible to obtain a contrast efficiency that is not only comparable to that of the standard uranyl acetate, but even better.

The Applicant has thus developed a new contrast agent comprising a heteropolyacid and a lanthanide salt in a suitable water/organic solvent mixture or an organic solvent, which benefits from a synergistic effect between the aforesaid ingredients. The surprising results obtained demonstrate that the contrast solution of the present invention not only provides better results than other contrast solutions that are alternatives to uranyl acetate, but even surpasses the performance of uranyl acetate itself in terms of contrast efficiency, while maintaining a good level of the signal in fluorescence images. In fact, the better efficiency of the contrast solution of the present invention enables its use also in low concentrations, thus preserving the possibility of characterisation by correlative microscopy.

The solution of the present invention can thus substitute for the commercial alternatives presently available on the market of contrast agents for both correlative CLEM characterisation and EM characterisation, and furthermore represents an economical alternative to the uranyl acetate-based contrast agents presently on the market.

### SUMMARY OF THE INVENTION

The present invention relates to a solution comprising: a heteropolyacid and a lanthanide salt in a solvent consisting of a water/organic solvent mixture or an organic solvent. Optionally, the solution can also comprise an organic or inorganic buffer with a pH comprised in the interval of 4-6 or a strong base or acid. The object of the present invention also includes a use of said solution and of any products of the reaction between the components thereof as a contrast medium for biological samples and a method for preparing biological samples which uses said solution in at least one step, for analysis by either correlative microscopy (CLEM) or conventional electron microscopy (EM).

### DESCRIPTION OF THE FIGURES

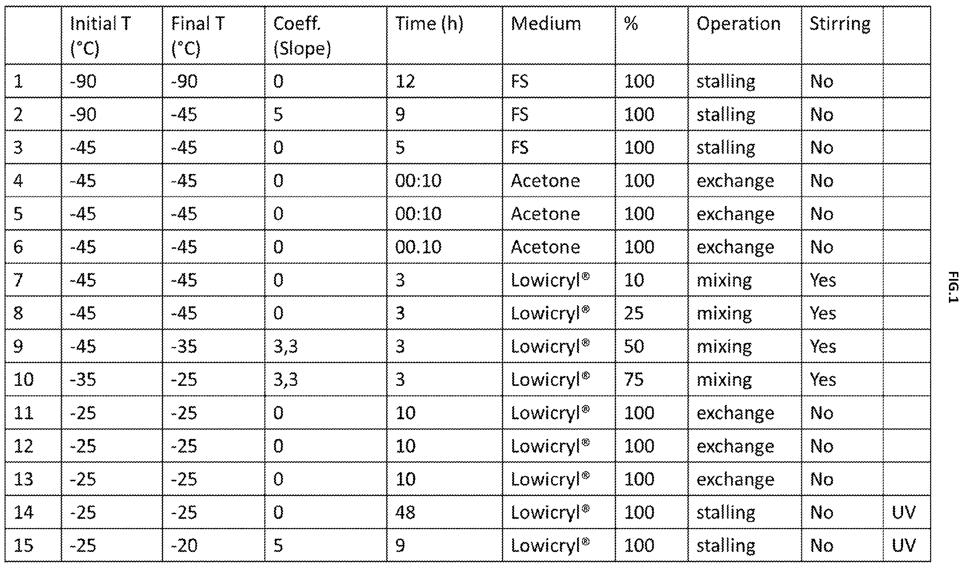

Figure 1 shows the parameters used by an automated embedder in the protocol for substituting water with an organic solvent at cryogenic temperatures (FS - *Freeze Substitution*), used for preparing biological samples to be characterised by means of the CLEM technique according to example 2.

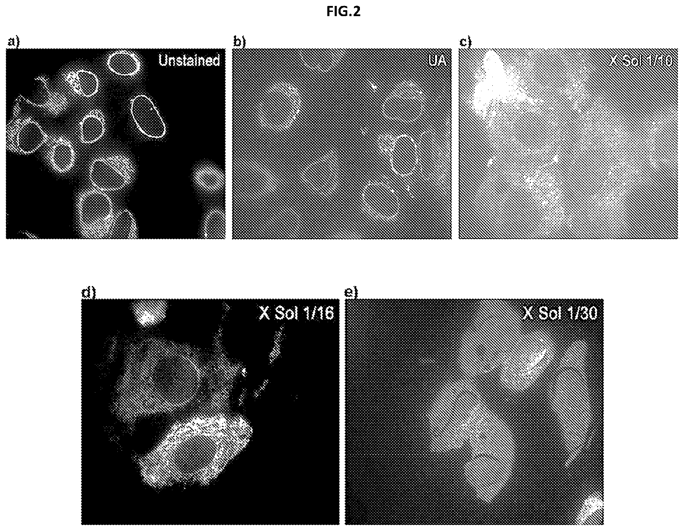

Figure 2 shows confocal microscope images for comparing cells prepared with different contrast protocols according to example 2. The substitution (FS) medium used is: 100% acetone, "*Unstained*" (a); 0.1% uranyl acetate in acetone, "*UA*" (b); a stock solution obtained as per example 1, freeze-dried and reconstituted in acetone in a 1/10 (v/v) ratio relative to the volume of the solution prior to freeze-drying, "*X Sol 1*/*10*" (c); a stock solution obtained as per example 1, freeze-dried and reconstituted in acetone in a 1/16 (v/v) ratio relative to the volume of the solution prior to freeze-drying, "*X Sol 1*/*16*" (d); and a stock solution obtained as per example 1, freeze-dried and reconstituted in acetone in a 1/30 (v/v) ratio relative to the volume of the solution prior to freeze-drying, "*X Sol 1*/*30*" (e).

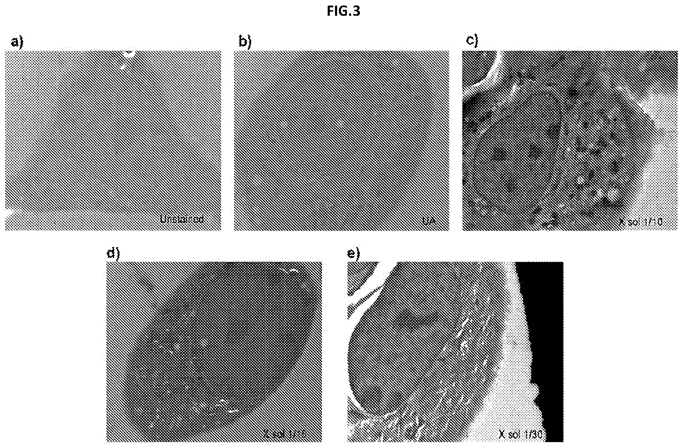

Figure 3 shows images, acquired by means of the transmission electron microscopy (TEM) technique, of the same cells observed by fluorescence microscopy as per example 2. The substitution (FS) medium used is: 100% acetone, "*Unstained*" (a); 0.1% of uranyl acetate in acetone, "*UA*" (b); a stock solution obtained as per example 1, freeze-dried and reconstituted in acetone in a 1/10 (v/v) ratio relative to the volume of the solution prior to freeze-drying, "*X Sol 1*/*10*" (c); a stock solution obtained as per example 1, freeze-dried and reconstituted in acetone in a 1/16 (v/v) ratio relative to the volume of the solution prior to freeze-drying, "*X Sol 1*/*16*" (d); and a stock solution obtained as per example 1, freeze-dried and reconstituted in acetone in a 1/30 (v/v) ratio relative to the volume of the solution prior to freeze-drying, "X Sol 1/30" (e).

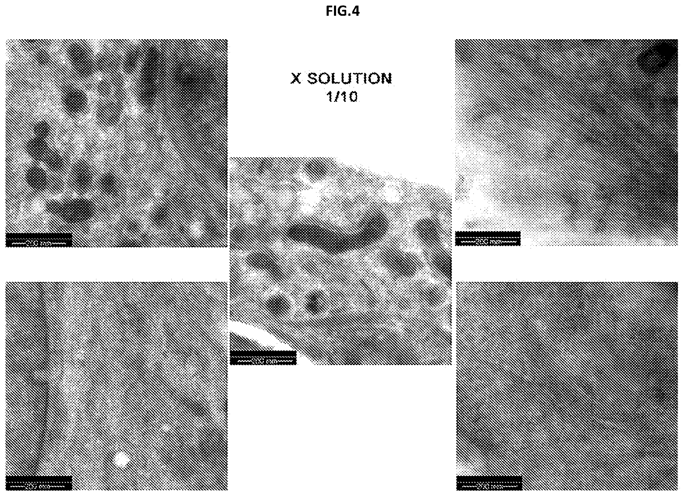

Figure 4 shows representative images, acquired by means of the transmission electron microscopy (TEM) technique, of the cells shown in
Figures 2 and 3, at a higher magnification. The substitution (FS) medium is the preferred medium according to the present invention, i.e. the stock solution obtained as per example 1, freeze-dried and reconstituted in acetone in a 1/10 (v/v) ratio relative to the volume of the solution prior to freeze-drying, "*X Sol 1*/*10*".
Figure 5 shows the CLEM procedure applied on a sample (Drosophila oocyte) prepared with the technique described in example 2 using ethanol as the organic solvent in the place of acetone, as per example 3.

### DETAILED DESCRIPTION

"Conventional electron microscopy", means microscopy that does not exploit light as the source of radiation, but rather an electron beam. Examples of "conventional electron microscopy" are scanning electron microscopy (SEM) and transmission electron microscopy (TEM). The term "conventional electron microscopy" is thus used, for the purposes of the present invention, as a synonym of "electron microscopy (EM)" according to the definition given above.

"Organic solvent", for the purposes of the present invention, means any organic solvent having a degree of purity, relative to the content of organic and inorganic compounds, comprised between 70 and 100% (v/v) (so-called "absolute"), and having a water content comprised between 50 and 0% (v/v) (so-called "anhydrous").

In a first aspect, the present invention relates to a solution comprising:
a) a heteropolyacid with the general formula H₃PM₁₂O₄₀, wherein M is tungsten or molybdenum;
b) a lanthanide salt with the general formula Ln(III)Aₓ*nH₂O, wherein Ln is an element belonging to the series of lanthanides other than promethium, A is an organic or inorganic anion, x is a whole number greater than or equal to 1, and n is a whole number greater than or equal to 0;
c) a solvent consisting of a water/organic solvent mixture or an organic solvent, wherein said organic solvent is selected from a ketone and an alcohol and, in the case of a water/organic solvent mixture, is present in an amount comprised from 1 to 99% (v/v), preferably from 20 to 99% (v/v), more preferably from 90 to 95% (v/v) relative to the total volume of the mixture in the case of ketone, or in an amount comprised from 71 to 99% (v/v), preferably from 80 to 95% (v/v), more preferably from 90% to 95% (v/v) relative to the total volume of the mixture in the case of alcohol.

The heteropolyacid, or complex acid, as per point a) is preferably phosphotungstic acid, with the formula H₃PW₁₂O₄₀, or phosphomolybdic acid, with the formula H₃PMo₁₂O₄₀, which are commercially available, or known precursors thereof containing phosphorous and tungsten or phosphorous and molybdenum, such as, for example: sodium tungstate with the formula Na₂WO₄ or sodium molybdate with the formula Na₂MoO₄, both to be mixed with orthophosphoric acid and hydrochloric acid.

The lanthanide salt as per point b) preferably has an element selected from ytterbium, europium, terbium and gadolinium as a cation; ytterbium is particularly preferred.

The corresponding anion is preferably a halide, even more preferably it is chloride. The lanthanide salt can be either in an anhydrous form, in the event that n is equal to 0, or in a hydrated form. In the latter case, said salt preferably contains a number n equal to 6 molecules of water of crystallisation.

The molar ratio between the component a) and the component b) of the present solution (b/a molar ratio) is preferably comprised in the interval of 0.1-100, preferably 1-50, even more preferably 1-15.

The concentration of the component b) in the solvent c) is preferably comprised from 0.01 to 250 mM, preferably from 0.1 to 100 mM, even more preferably from 1 to 50 mM. Outside these intervals, in fact, one observes an increase in the nonspecific contrast of the samples, which leads to a reduction in the signal-to-noise ratio.

In a preferred embodiment of the invention, the solvent c) consists of a water/organic solvent mixture or an organic solvent, wherein said organic solvent is a ketone and wherein, in the case of the water/organic solvent mixture, the organic solvent is present in an amount comprised from 1 to 99% (v/v), preferably from 20 to 99% (v/v), more preferably from 90 to 95% (v/v) relative to the total volume of the water/ketone mixture.

Said ketone is selected from a ketone with a number of carbon atoms comprised from 1 to 4, preferably from 1 to 3. Preferably, said ketone is acetone.

In one embodiment of the invention, the solvent c) consists of a water/organic solvent mixture or an organic solvent, wherein said organic solvent is an alcohol and wherein, in the case of the water/organic solvent mixture, the organic solvent is present in an amount comprised from 71 to 99% (v/v), preferably from 80 to 95% (v/v), more preferably from 90 to 95% (v/v) relative to the total volume of the water/alcohol mixture. Said alcohol is selected from an alcohol with a number of carbon atoms comprised from 1 to 4, preferably from 1 to 3. Said alcohol is preferably selected from methanol and ethanol.

The water and organic solvent mixture has the advantage of optimising the penetration of the contrast agent into the biological sample, and the aqueous part of said mixture makes the preparation of the contrast solution simpler in terms of the dissolution of the above-described components a) and b).

Optionally, in some embodiments of the invention, in addition to the intrinsic buffering power of the component a), a buffer solution or a strong acid or base can be used to reach the pH interval of 4-6. In the case of a buffer solution, it is selected from the ones known to the person skilled in the art and can be an organic or inorganic buffer, such as, for example, 2-[N-morpholino]ethanesulfonic acid (MES), cacodylate, acetate or formate.

In a particularly preferred embodiment, the solution according to the present invention comprises:
a) phosphotungstic acid, with the formula H₃PW₁₂O₄₀;
b) ytterbium chloride hexahydrate, with the formula YbCl₃*6H₂O;
c) a solvent consisting of a water/acetone mixture containing from 90% to 95% (v/v) acetone relative to the total volume of the water/acetone mixture;

The solution described thus far, comprising the components a) to c), has application as a contrast medium for the characterisation of biological samples in a suspension (negative contrast) or embedded in resin, processed for correlative microscopy (CLEM) or conventional electron microscopy (EM).

In a second aspect, the present invention relates to the use of a compound obtainable from the reaction between the above-described components a) and b), under ambient pressure and temperature conditions and at a pH comprised in the interval of 4-6, as a contrast medium for biological samples for analysis by either correlative microscopy (CLEM) or conventional electron microscopy (EM).

A compound obtainable from a reaction between the components a) and b) means a chemical species containing atoms of oxygen, phosphorous and M originating from the component a) and Ln originating from the component b), and which manifests itself as thermodynamically stable in the solution of the solvent c) under the aforesaid conditions and can be used both in the correlative microscopy (CLEM) technique and in conventional electron microscopy (EM), preferably in the correlative microscopy (CLEM) technique.

According to a preferred embodiment, said compound is obtained from the reaction between equimolar amounts of phosphotungstic acid as component a) and ytterbium chloride as component b) and has the formula [YbPW₉O₃₄]⁶⁻. This species is defined as a lanthanide polyoxometalate.

In a third aspect, the present invention relates to a method for preparing biological samples for analysis by either correlative microscopy (CLEM) or conventional electron microscopy (EM) and comprising the following steps:
i) performing a physical fixation of the biological sample to be analysed, following the high pressure freezing (HPF) method;
ii) performing the technique of substituting water with an organic solvent at cryogenic temperatures (FS - freeze substitution) in a frozen biological sample obtained in step (i), where the substitution medium is the solution comprising the components a) to c) as defined above.

The solution as per step ii) proves to be particularly effective when it has a concentration of the component b) comprised from 0.01 to 250 mM, preferably from 0.1 to 100 mM, even more preferably from 1 to 50 mM. Outside these intervals, in fact, one observes an increase in the nonspecific contrast of the samples, which leads to a reduction in the signal-to-noise ratio.

In one embodiment, the solution as per step ii), comprising the components a) to c) according to the present invention, can be obtained starting from a solution comprising the components a) and b) dissolved in a solvent c'), wherein said solvent c') is an aqueous or hydroalcoholic solvent containing up to 70% (v/v) alcohol, preferably a hydroalcoholic solvent containing up to 70% (v/v) ethanol. Said solution comprising the components a), b) and c') represents an intermediate solution and is called, for the purposes of the present invention, a "stock solution". In a preferred embodiment of the method for preparing biological samples according to the present invention, said stock solution is in fact dried, preferably by freeze-drying, and subsequently reconstituted in a suitable amount of the solvent c) as previously defined, thus obtaining the solution comprising the components a)-c) according to the present invention.

### EXAMPLES

### Example 1

### Preparation of the PTA-YbCl₃ solution (stock solution)

A solution of phosphotungstic acid (concentration 3.2 mM) in 10 ml of water/ethanol containing 20% (v/v) ethanol was prepared. The pH of this solution was brought to around 5 with sodium hydroxide 1M. This solution had added to it an equal volume of an ytterbium chloride hexahydrate 48 mM (final concentration) solution in ethanol/water containing 20% (v/v) ethanol. The pH was again adjusted to 5 with sodium hydroxide 1M. The mixture was kept under stirring overnight at room temperature. The solution thus obtained was called "X solution 1.5" and manifested a precipitate. The precipitate was removed by filtration and the pH was again adjusted to around 5 by adding a 20 mM solution of MES. The solution was then again kept under stirring overnight and again filtered, this time through a membrane with a pore size of 200 nm so as to obtain a solution free of precipitate and called "stock solution". The stock solution was then stored in the dark at a temperature of 4 °C until the time of use.

### Example 2

### Use of the solution according to the present invention as a contrast agent for characterisation by correlative microscopy (CLEM) using the HPF/FS protocol for biological samples.

The stock solution obtained as per example 1 (0.2 ml) was freeze-dried and reconstituted in 2 ml ("X Sol 1/10"), 3.2 ml ("X Sol 1/16") or 6 ml ("X Sol 1/30") of a water/acetone mixture containing 95% (v/v) acetone in order to obtain the solution according to the present invention, in three different concentrations, respectively.

Each solution was centrifuged and the supernatant was used as the substitution medium in the standard HPF/FS protocol (illustrated in Figure 1) on line cell stably transfected with a fluorescent protein conjugated to the endoplasmic reticulum. These were used as the standard sample for the correlative protocols. The cells embedded with this protocol were processed by means of the technique of high-pressure freezing/substitution of water with an organic solvent at cryogenic temperatures (HPF/FS). The correlative analysis was performed on sample sections (cut by using an ultramicrotome) and collected on supports for electron microscopy (copper grids). The same grid on which the above-mentioned sections were collected was analysed both by confocal optical microscopy for the selection of the fields of interest and, subsequently, by means of an ultrastructural approach. The correlation between the two types of images originating from the same sample is the basic principle of correlative methods, that is, the association of functional data (marking of the endoplasmic reticulum) with structural data (as the same cells appear positive for the fluorescence signal).

The various samples obtained were observed using both the confocal optical microscopy technique (Figure 2) and the transmission electron microscopy TEM (Figure 3) technique and the results were compared with those obtained using uranyl acetate ("UA") as the contrast agent or in the absence of a contrast agent ("unstained").

Figure 4 shows the TEM images of the samples with the preferred contrast solution according to the present invention, i.e. the solution obtained starting from the stock solution described in example 1, freeze-dried and reconstituted in acetone in a 1/10 (v/v) ratio relative to the volume of the solution prior to freeze-drying. In these images it is possible to observe how the cellular ultrastructure is extremely well resolved thanks precisely to the increase in contrast efficiency. In particular, in this case, using the solution according to the present invention makes it possible to visualise subcellular details (such as, for example, the cytoskeleton) that are not generally observable using traditional contrast agents, for example based on uranyl acetate.

### Example 3

### Use of the solution according to the present invention as a contrast agent for characterisation by correlative microscopy (CLEM) with the HPF/FS protocol for biological samples (Drosophila oocyte)

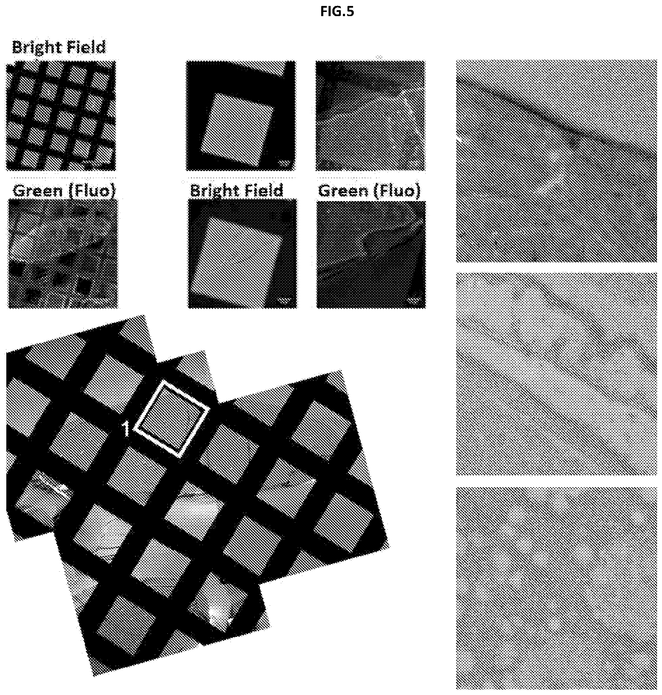

An experiment similar to the one described in Example 2 was carried out using Drosophila oocytes as the biological sample and using ethanol as an organic solvent in the place of acetone. The images obtained are shown in Figure 5.

The images obtained thus show that the solution of the present invention enables comparable results to be obtained in terms of fluorescence emission, while at the same time ensuring, however, better contrast than when a solution containing uranyl acetate is used, thus proving more effective in the case of characterisation by correlative microscopy (CLEM).

## Claims

1. A solution comprising:
a) a heteropolyacid with the general formula H₃PM₁₂O₄₀, wherein M is tungsten or molybdenum,
b) a lanthanide salt with the general formula Ln(III)Aₓ*nH₂O, wherein Ln is an element belonging to the series of lanthanides other than promethium, A is an organic or inorganic anion, x is a whole number greater than or equal to 1, and n is a whole number greater than or equal to 0;
c) a solvent consisting of a water/organic solvent mixture or an organic solvent, wherein said organic solvent is selected from a ketone and an alcohol and, in the case of a water/organic solvent mixture, is present in an amount comprised from 1 to 99% (v/v) relative to the total volume of the mixture in the case of ketone, or in an amount comprised from 71 to 99% (v/v) relative to the total volume of the mixture in the case of alcohol.

2. The solution according to claim 1, wherein the molar ratio between the component a) and the component b) (b/a molar ratio) is comprised in the interval of 0.1-100, even more preferably 1-50, even more preferably 1-15.

3. The solution according to claim 1 or 2, wherein the concentration of the component b) in the solvent c) is comprised from 0.01 to 250 mM, preferably from 0.1 to 100 mM, even more preferably from 1 to 50 mM.

4. The solution according to any one of the preceding claims, wherein the component b) has an element selected from ytterbium, europium, terbium and gadolinium as a cation.

5. The solution according to any one of the preceding claims, wherein the component b) has a halide as an anion.

6. The solution according to any one of the preceding claims, wherein the solvent c) consists of a water/organic solvent mixture or an organic solvent, wherein said organic solvent is selected from a ketone and a alcohol and is present, in the case of the water/organic solvent mixture, in an amount comprised from 20 to 99% (v/v), preferably from 90 to 95% (v/v), relative to the total volume of the mixture in the case of ketone, or in an amount comprised from 80 to 95% (v/v), preferably from 90 to 95% (v/v) relative to the total volume of the mixture in the case of alcohol.

7. The solution according to any one of the preceding claims, wherein the solvent c) consists of a water/organic solvent mixture in which said organic solvent is a ketone with a number of carbon atoms comprised from 1 to 4, preferably from 1 to 3, or an alcohol with a number of carbon atoms comprised from 1 to 4, preferably from 1 to 3.

8. The solution according to any one of the preceding claims, wherein the solvent c) consists of a water/organic solvent mixture or an organic solvent, wherein said organic solvent is selected from acetone, methanol and ethanol, preferably acetone.

9. A use of the solution according to any one of the preceding claims as a contrast medium for the characterisation of biological samples in suspension (negative contrast) or embedded in resin by means of correlative microscopy (CLEM) or electron microscopy (EM).

10. The use, according to claim 9, of the compound obtained from the reaction between the components a) and b) according to any one of the preceding claims under ambient pressure and temperature conditions and at a pH comprised in the interval of 4-6, wherein said compound has the formula [YbPW₉O₃₄]⁶⁻.

11. A method for preparing biological samples for analysis by correlative microscopy (CLEM) or electron microscopy (EM), comprising the following steps:
i) performing a physical fixation of the biological sample to be analysed, following the high pressure freezing (HPF) method;
ii) performing the technique of substituting water with an organic solvent at cryogenic temperatures (FS - freeze substitution) in a frozen biological sample obtained in step (i), where the substitute medium is the solution comprising the components a) to c) according to claims 1-8;

12. The method according to claim 11, wherein said solution as per step ii) is obtained starting from an intermediate solution comprising the components a) and b) in a solvent c'), said solvent c') being an aqueous or hydroalcoholic solvent containing up to 70% (v/v) alcohol, said intermediate solution then being dried and subsequently reconstituted in the solvent c).

## Patentansprüche

1. Lösung, umfassend:
a) eine Heteropolysäure mit der allgemeinen Formel H₃PM₁₂O₄₀, wobei M Wolfram oder Molybdän ist,
b) ein Lanthanidsalz mit der allgemeinen Formel Ln(III)Aₓ*nH₂O, wobei Ln ein Element ist, das zur Lanthanidenreihe außer Promethium gehört, A ein organisches oder anorganisches Anion ist, x eine ganze Zahl größer oder gleich 1 ist und n eine ganze Zahl größer oder gleich 0 ist;
c) ein Lösungsmittel, das aus einem Wasser/organischen Lösungsmittelgemisch oder einem organischen Lösungsmittel besteht, wobei das organische Lösungsmittel aus einem Keton und einem Alkohol ausgewählt ist und es im Falle eines Wasser/organischen Lösungsmittelgemisches in einer Menge, die von 1 bis 99 % (v/v), relativ zum Gesamtvolumen des Gemisches im Falle von Keton enthalten ist oder in einer Menge, die von 71 bis 99 % (v/v), relativ zum Gesamtvolumen des Gemisches im Falle von Alkohol enthalten ist, vorliegt.

2. Lösung nach Anspruch 1, wobei das Molverhältnis zwischen der Komponente a) und der Komponente b) (b/a-Molverhältnis) im Intervall von 0,1-100, noch bevorzugter 1-50, noch bevorzugter 1-15 enthalten ist.

3. Lösung nach Anspruch 1 oder 2, wobei die Konzentration der Komponente b) im Lösungsmittel c) von 0,01 bis 250 mM, bevorzugt von 0,1 bis 100 mM, noch bevorzugter von 1 bis 50 mM enthalten ist.

4. Lösung nach einem der vorhergehenden Ansprüche, wobei die Komponente b) ein Element ausgewählt aus ytterbium, Europium, Terbium und Gadolinium als Kation aufweist.

5. Lösung nach einem der vorhergehenden Ansprüche, wobei die Komponente b) ein Halogenid als Anion aufweist.

6. Lösung nach einem der vorhergehenden Ansprüche, wobei das Lösungsmittel c) aus einem Wasser/organischen Lösungsmittelgemisch oder einem organischen Lösungsmittel besteht, wobei das organische Lösungsmittel aus einem Keton und einem Alkohol ausgewählt ist und es im Falle des Wasser/organischen Lösungsmittelgemisches in einer Menge, die von 20 bis 99 % (v/v), vorzugsweise von 90 bis 95 % (v/v), relativ zum Gesamtvolumen des Gemisches im Falle von Keton enthalten ist, oder in einer Menge, die von 80 bis 95 % (v/v), vorzugsweise von 90 bis 95 % (v/v), relativ zum Gesamtvolumen des Gemisches im Falle von Alkohol, enthalten ist, vorliegt.

7. Lösung nach einem der vorhergehenden Ansprüche, wobei das Lösungsmittel c) aus einem Wasser/organischen Lösungsmittelgemisch besteht, in dem das organische Lösungsmittel ein Keton mit einer Anzahl von Kohlenstoffatomen, die im Bereich von 1 bis 4, vorzugsweise von 1 bis 3 enthalten ist, oder ein Alkohol mit einer Anzahl von Kohlenstoffatomen, die im Bereich von 1 bis 4, vorzugsweise von 1 bis 3 enthalten ist, ist.

8. Lösung nach einem der vorhergehenden Ansprüche, wobei das Lösungsmittel c) aus einem Wasser/organischen Lösungsmittelgemisch oder einem organischen Lösungsmittel besteht, wobei das organische Lösungsmittel aus Aceton, Methanol und Ethanol, vorzugsweise Aceton, ausgewählt ist.

9. Verwendung der Lösung nach einem der vorhergehenden Ansprüche als Kontrastmittel zur Charakterisierung biologischer Proben in Suspension (Negativkontrast) oder eingebettet in Harz mittels korrelativer Mikroskopie (CLEM) oder Elektronenmikroskopie (EM).

10. Verwendung nach Anspruch 9 der aus der Reaktion zwischen den Komponenten a) und b) erhaltenen Verbindung nach einem der vorhergehenden Ansprüche unter Umgebungsdruck- und Temperaturbedingungen und bei einem pH-Wert, der im Intervall von 4-6 enthalten ist, wobei die Verbindung die Formel [YbPW₉O₃₄]⁶⁻ aufweist.

11. Verfahren zur Vorbereitung biologischer Proben für die Analyse durch korrelative Mikroskopie (CLEM) oder Elektronenmikroskopie (EM), umfassend die folgenden Schritte:
i) Durchführen einer physikalischen Fixierung der zu analysierenden biologischen Probe nach dem Hochdruckgefrierverfahren (HPF);
ii) Durchführen der Technik der Substitution von Wasser durch ein organisches Lösungsmittel bei kryogenen Temperaturen (FS - Gefriersubstitution) in einer in Schritt (i) erhaltenen gefrorenen biologischen Probe, wobei das Substitutionsmedium die Lösung ist, die die Komponenten a) bis c) nach den Ansprüchen 1-8 umfasst.

12. Verfahren nach Anspruch 11, wobei die Lösung gemäß Schritt ii) ausgehend von einer Zwischenlösung erhalten wird, die die Komponenten a) und b) in einem Lösungsmittel c') umfasst, wobei das Lösungsmittel c') ein wässriges oder hydroalkoholisches Lösungsmittel ist, das bis zu 70% (v/v) Alkohol enthält, wobei die Zwischenlösung dann getrocknet und anschließend in dem Lösungsmittel c) rekonstituiert wird.

## Revendications

1. Solution, comprenant :
a) un hétéropolyacide de formule générale H₃PM₁₂O₄₀, dans laquelle M est du tungstène ou du molybdène,
b) un sel de lanthanide de formule générale Ln(III)Aₓ*nH₂O, dans laquelle Ln est un élément appartenant à la série des lanthanides autres que le prométhium, A est un anion organique ou inorganique, x est un nombre entier supérieur ou égal à 1, et n est un nombre entier supérieur ou égal à 0 ;
c) un solvant constitué d'un mélange eau/solvant organique ou d'un solvant organique, dans laquelle ledit solvant organique est choisi parmi une cétone et un alcool et, dans le cas d'un mélange eau/solvant organique, est présent dans une quantité comprise entre 1 et 99 % (v/v) par rapport au volume total du mélange dans le cas de la cétone, ou dans une quantité comprise entre 71 et 99 % (v/v) par rapport au volume total du mélange dans le cas de l'alcool.

2. Solution selon la revendication 1, dans laquelle le rapport molaire entre le composant a) et le composant b) (rapport molaire b/a) est compris dans l'intervalle de 0,1-100, encore plus préférablement 1-50, encore plus préférablement 1-15.

3. Solution selon la revendication 1 ou 2, dans laquelle la concentration du composant b) dans le solvant c) est comprise entre 0,01 et 250 mM, de préférence entre 0,1 et 100 mM, encore plus préférablement entre 1 et 50 mM.

4. Solution selon l'une quelconque des revendications précédentes, dans laquelle le composant b) comporte un élément choisi parmi l'ytterbium, l'europium, le terbium et le gadolinium en tant qu'un cation.

5. Solution selon l'une quelconque des revendications précédentes, dans laquelle le composant b) comporte un halogénure en tant qu'un anion.

6. Solution selon l'une quelconque des revendications précédentes, dans laquelle le solvant c) est constitué d'un mélange eau/solvant organique ou d'un solvant organique, dans laquelle ledit solvant organique est choisi parmi une cétone et un alcool et est présent, dans le cas du mélange eau/solvant organique, dans une quantité comprise entre 20 et 99 % (v/v), de préférence entre 90 et 95 % (v/v), par rapport au volume total du mélange dans le cas de la cétone, ou dans une quantité comprise entre 80 et 95 % (v/v), de préférence entre 90 et 95 % (v/v) par rapport au volume total du mélange dans le cas de l'alcool.

7. Solution selon l'une quelconque des revendications précédentes, dans laquelle le solvant c) est constitué d'un mélange eau/solvant organique dans laquelle ledit solvant organique est une cétone dont le nombre d'atomes de carbone est compris entre 1 et 4, de préférence entre 1 et 3, ou un alcool dont le nombre d'atomes de carbone est compris entre 1 et 4, de préférence entre 1 et 3.

8. Solution selon l'une quelconque des revendications précédentes, dans laquelle le solvant c) est constitué d'un mélange eau/solvant organique ou d'un solvant organique, ledit solvant organique étant choisi parmi l'acétone, le méthanol et l'éthanol, de préférence l'acétone.

9. Utilisation de la solution selon l'une quelconque des revendications précédentes comme un moyen de contraste pour la caractérisation d'échantillons biologiques en suspension (contraste négatif) ou intégrés dans une résine au moyen de la microscopie corrélative (CLEM) ou de la microscopie électronique (EM).

10. Utilisation, selon la revendication 9, du composé obtenu à partir de la réaction entre les composants a) et b) selon l'une quelconque des revendications précédentes dans des conditions de pression et de température ambiantes et à un pH compris dans l'intervalle 4-6, dans laquelle ledit composé a la formule [YbPW₉O₃₄]⁶⁻.

11. Méthode de préparation d'échantillons biologiques en vue d'une analyse par microscopie corrélative (CLEM) ou microscopie électronique (EM), comprenant les étapes suivantes :
i) effectuer une fixation physique de l'échantillon biologique à analyser, en suivant la méthode de congélation à haute pression (HPF) ;
ii) réaliser la technique de substitution de l'eau par un solvant organique à des températures cryogéniques (congélation-dissolution) dans un échantillon biologique congelé obtenu à l'étape (i), où le milieu de substitution est la solution comprenant les composants a) à c) selon les revendications 1-8.

12. Méthode selon la revendication 11, dans laquelle ladite solution selon l'étape ii) est obtenue à partir d'une solution intermédiaire comprenant les composants a) et b) dans un solvant c'), ledit solvant c') étant un solvant aqueux ou hydroalcoolique contenant jusqu'à 70 % (v/v) d'alcool, ladite solution intermédiaire étant ensuite séchée puis reconstituée dans le solvant c).
